# EUROPÄISCHE PATENTSCHRIFT

(11) **EP 0 705 996 B1**
(45) Veröffentlichungstag und Bekanntmachung des Hinweises auf die Patenterteilung: **28.01.1998**
(21) Anmeldenummer: 95113428.7
(22) Anmeldetag: 26.08.1995
(51) Int. Cl.: F16H 55/56

(54) **Kegelscheibenumschlingungsgetriebe mit einem die Losscheibe umfassenden Druckzylinder**
Belt and conical pulley transmission having a pressure cylinder surrounding the movable pulley half
Transmission à poulies coniques et courroie avec un cylindre d'appuie enveloppant la partie mobile de la poulie

(30) Priorität: 07.10.1994 DE 4435937
(43) Veröffentlichungstag der Anmeldung: 10.04.1996
(73) Patentinhaber: Volkswagen Aktiengesellschaft, 38436 Wolfsburg (DE)
(72) Erfinder: Lutz, Wolf-Rüdiger, Dr., D-38442 Wolfsburg (DE); Remmlinger, Ulrich, Dr., D-38104 Braunschweig (DE)

(56) Entgegenhaltungen:
- EP-A- 0 221 462
- EP-A- 0 520 611
- EP-A- 0 658 709
- US-A- 4 528 870

## Beschreibung

Die Erfindung betrifft ein Kegelscheibenumschlingungsgetriebe gemäß dem Oberbegriff des Patentanspruchs 1.

Ein derartiges, speziell für den Front-Quer-Einbau in ein Kraftfahrzeug vorgesehenes stufenloses Automatikgetriebe ist beispielsweise aus der Automobiltechnischen Zeitschrift 96 (1994) 6, Seite 378 bis Seite 384 bekannt. Bei diesem Getriebe ist in an sich bekannter Weise auf der Getriebeprimärwelle und der Getriebesekundärwelle jeweils ein Kegelscheibensatz aufgebaut, die von einem Kraftübertragungsmittel, beispielsweise einem Schubgliederband oder einer Kette, umschlungen sind. Zur Einstellung des Übersetzungsverhältnisses des Getriebes ist auf der Primärwelle eine Kegelscheibe fest und eine weitere Kegelscheibe drehfest, aber axial verschiebblich angeordnet. Zur Erzeugung der Verstellbewegung ist auf der von dem Übertragungsmittel wegweisenden Seite der axial losen Kegelscheibe ein Druckzylinder vorgesehen, der sich auf der Primärwelle abstützt und den Druckraum zur Kegelscheibe über ein zylindrisches Bauteil abdichtet, das am radial äußeren Ende dieser Kegelscheibe befestigt und mit dieser verschiebbar ist. Mit einem derartigen Aufbau wird zwar eine vergleichsweise große Führungslänge für diese Losscheibe und damit eine geringe Kippneigung erreicht, dies geht allerdings auf Kosten der axialen Baulänge, wodurch der Einbau eines solchen Getriebes gerade in vergleichsweise kleinen Kraftfahrzeugen erschwert wird.

Außerdem ist aus der US 4,528,870 ein gattungsbildendes stufenloses Kegelscheibenumschlingungsgetriebe bekannt, mit einem auf einer Primärwelle angeordneten Kegelscheibensatz, mit einer mit dieser Primärwelle fest verbundenen Kegelscheibe, mit einer auf dieser Welle drehfest, aber axial verschiebbar angeordneten Kegelscheibe mit einem Druckzylinder, der mit der losen Kegelscheibe einen Druckraum einschließt sowie mit Zuleitungen für das Druckmittel und Dichtungen zwischen dem Druckzylinder und der losen Kegelscheibe, wobei der Druckzylinder ein U-förmiges radial äußeres Ende aufweist, welches zur Aufnahme von einem sich parallel zur Primärwelle erstreckenden Bauteil der losen Kegelscheibe dient.

Der Erfindung liegt daher die Aufgabe zugrunde, ein gattungsgemäßes stufenloses Automatikgetriebe mit einer kürzer bauenden Losscheiben-Druckzylinderanordnung vorzustellen.

Die Lösung dieser Aufgabe ergibt sich aus den kennzeichnenden Merkmalen des Patentanspruchs 1, während Weiterbildungen und Ausgestaltungen der Erfindung den Unteransprüchen entnehmbar sind.

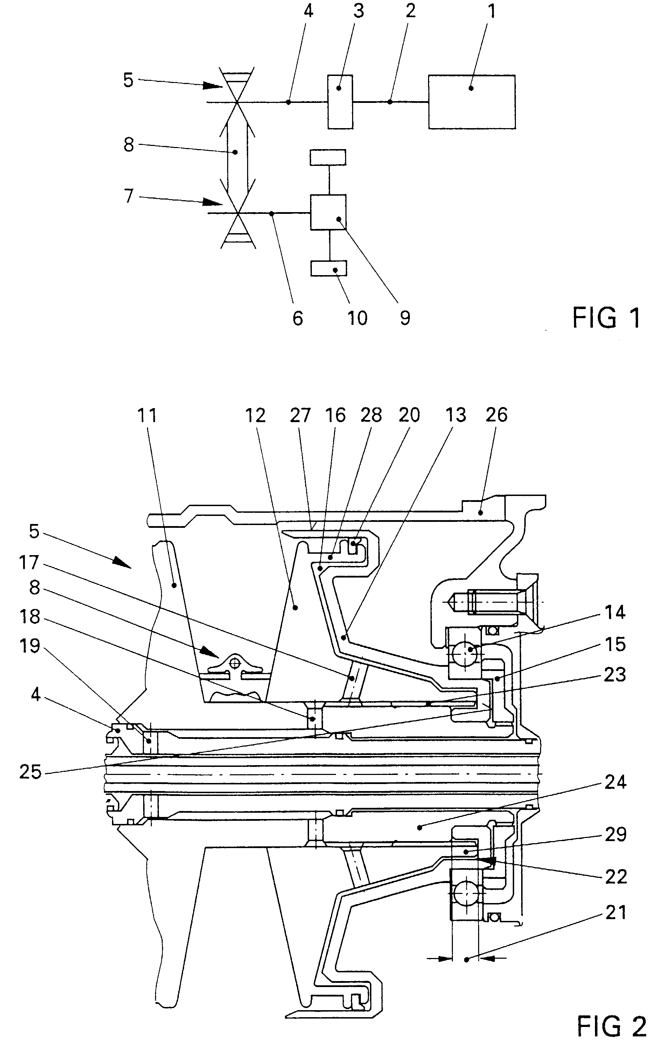

Durch die erfindungsgemäße Anordnung des Losscheibenlagers in einem radial inneren Abschnitt des Druckzylinders kann in vorteilhafter Weise Bauraum in axialer Länge des Getriebes gewonnen werden. Dabei ermöglicht die u-förmige Ausbildung des radial inneren Endes des Druckzylinders die notwendige Führungslänge für die axial verschiebbliche Kegelscheibe. Weiterer axialen Bauraum wird zusätzlich durch die Anordnung eines Lagers auf diesem inneren Druckzylinderabschnitt gewonnen. Zur Verdeutlichung der Erfindung ist der Beschreibung eine Zeichnung beigefügt, in der Figur 1 den schematischen Aufbau des Automatikgetriebes darstellt, während in Figur 2 die erfindungsgemäße Losscheiben-Druckzylinderanordnung dargestellt ist.

In dieser Figur ist mit 1 die Brennkraftmaschine eines Kraftfahrzeuges bezeichnet, deren Kurbelwelle 2 über einen Drehmomentenwandler 3 mit der Primärwelle 4 des stufenlosen Automatikgetriebes verbunden ist. Auf dieser Primärwelle 4 ist ein Primärkegelscheibensatz 5 angeordnet, dem auf der Sekundärwelle 6 des Getriebes ein Sekundärkegelscheibensatz 7 gegenüber steht. Beide Kegelscheibensätze 5, 7 sind von einem flexiblen Kraftübertragungsmittel 8, beispielsweise einer Kette oder einem Schubgliederband, umschlungen. Die Sekundärwelle 6 ist ihrerseits mit einem Differenzialgetriebe 9 verbunden, von dem Achswellen zum Antrieb der Fahrzeugräder 10 abgehen.

In Figur 2 ist in einer schematischen Querschnittsdarstellung der auf der Primärwelle 4 angeordnete Primärkegelscheibensatz 5 dargestellt. Mit der Primärwelle 4 drehfest verbunden ist die Festscheibe 11, der eine auf der Primärwelle axial verschiebbare Losscheibe 12 gegenübersteht. Die zur Einstellung des Übersetzungsverhältnisses notwendige Verschiebung der Losscheibe 12 erfolgt über einen Druckzylinder 13, der zusammen mit der Losscheibe 12 einen Druckraum 16 umschließt. Dieser Druckraum 16 ist über wenigstens ein Dichtmittel 20 gegenüber den Innenraum des Getriebegehäuses 26 abgedichtet. Die Versorgung des Druckraumes 16 mit einem Druckmittel erfolgt über die Bohrungen 17,18,19.

Zur Reduzierung der axialen Baulänge des Getriebes unter gleichzeitiger Gewährleistung einer ausreichenden Führungslänge für die Losscheibe 12 ist der Druckzylinder 13 so ausgebildet, daß er an seinem radial inneren Ende 22 und seinem radial äußeren Ende 27 u-förmig ausgebildet ist. Dabei ragt in den u-förmigen Abschnitt 27 des Druckzylinders 13 ein das Dichtmittel 20 tragender Fortsatz 28 der Losscheibe 12, während in den radial inneren u-förmigen Abschnitt 22 des Druckzylinders 13 die Losscheibe 12 mit einem koaxial zur Welle 4 verlaufenden Führungsabschnitt bei ihrem Verschieben von der Festscheibe 11 weg eintaucht.

Zur Lagerung des Druckzylinders 13 ist ein Lager 14 vorgesehen, das auf dem radial inneren u-förmigen Abschnitt 22 angeordnet und sich auf seiner anderen Seite an Getriebegehäusebauteilen abstützt. Dieses Lager 14 wird ferner zur Aufnahme von axialen Kräften von einer flachbauenden Mutter 15 koaxial zur Welle 4 fixiert, die auf einem Wellenfortsatz 24 der Festscheibe 11 aufgeschraubt ist. Diese Mutter 15 weist auf ihrer zum Druckzylinder 13 weisenden Seite eine etwa topfförmige Einsenkung 25 auf, die so tief ist, daß auch nach dem festen Anziehen dieser Mutter 15 ein Spalt zwischen der Einsenkung 25 und dem Druckzylinder 13 erhalten bleibt. Auf diese Weise kann sich diese Mutter in dem Gewinde des Wellenfortsatzes 24 verspannen, wodurch eine Losdrehsicherung gewährleistet ist.

Da die volle Abstützung der Losscheibe 12 nur dann erforderlich ist, wenn das Umschlingungsmittel 8 auf einem radial äußeren Radius läuft, die Losscheibe 12 also ganz in Richtung zur Festscheibe 11 verfahren wurde, können die Führungsnuten 23 in der Losscheibe 12 mit Spiel gegenüber dem Druckzylinder 13 ausgeführt werden.

Durch die Anordnung des Lagers 14 auf dem Druckzylinder 13 sowie der u-förmigen radialen Abschnitte 22, 27 des Druckzylinders 13 läßt sich die axiale Baulänge des Getriebes um die mit dem Pfeil 21 markierte Strecke vorteilhaft verringern.

## Patentansprüche

1. Stufenloses Kegelscheibenumschlingungsgetriebe,
mit einem auf einer Primärwelle (4) angeordneten Kegelscheibensatz (11, 12), mit einer mit dieser Primärwelle (4) fest verbundenen Kegelscheibe (11),
mit einer auf dieser Welle (4) drehfest, aber axial verschiebbar angeordneten Kegelscheibe (12),
mit einem Druckzylinder (13), der mit der losen Kegelscheibe (12) einen Druckraum (16) einschließt,
sowie mit Zuleitungen (17, 18, 19) für das Druckmittel und Dichtungen (20) zwischen dem Druckzylinder (13) und der losen Kegelscheibe (12),
wobei der Druckzylinder (13) ein U-förmig ausgebildetes Ende aufweist,
dadurch gekennzeichnet,
daß ein U-förmiges Druckzylinderende (22) am radial inneren Umfang des Druckzylinders (13) ausgebildet ist,
daß das Druckzylinderende (22) zur Aufnahme von einem sich parallel zur Primärwelle (4) erstreckenden Fortsatz (29) der losen Kegelscheibe (12) dient,
daß zur Lagerung des Druckzylinders (13) radial außerhalb des U-förmigen Druckzylinderendes (22) ein Lager (14) angeordnet ist und
daß das Lager (14) zwischen dem Druckzylinder (13) und einer auf einem Wellenfortsatz (24) der festen Kegelscheibe (11) aufgeschraubten Mutter (15) fixiert ist.

2. Getriebe nach Anspruch 1, dadurch gekennzeichnet, daß die lose Kegelscheibe (12) an ihrem radial äußeren Ende einen axialen Fortsatz (28) aufweist, der in ein radial äußeres U-förmiges Ende (27) des Druckzylinders (13) ragt.

3. Getriebe nach Anspruch 1 oder 2, dadurch gekennzeichnet, daß die Mutter (15) auf ihrer zum Druckzylinder (13) weisenden Seite eine Einsenkung (25) aufweist, die so bemessen ist, daß zwischen dem Druckzylinder (13) und der sich tellerfederartig verformenden Mutter (15) in fest angezogenem Zustand ein Luftspalt erhalten bleibt.

## Claims

1. Continuous belt and conical pulley transmission,
comprising a conical disc set (11, 12) disposed on a primary shaft (4), having one conical disc (11) fixedly connected to this primary shaft (4),
having one conical disc (12) disposed on the said shaft (4) in a non-rotatable but axially displaceable manner,
comprising a pressure cylinder (13) which together with the movable conical disc (12) encloses a pressure chamber (16)
and further comprising inlet lines (17, 18, 19) for the pressure medium and seals (20) between the pressure cylinder (13) and the movable conical disc (12),
wherein the pressure cylinder (13) comprises a U-shaped end,
characterised in
that a U-shaped pressure cylinder end (22) is formed on the radially inner circumference of the pressure cylinder (13),
that the pressure cylinder end (22) serves to receive an extension (29) of the movable conical disc (12), which extension extends parallel to the primary shaft (4),
that for the purpose of mounting the pressure cylinder (13) a bearing (14) is disposed radially outside the U-shaped pressure cylinder end (22), and
that the bearing (14) is fixed between the pressure cylinder (13) and a nut (15) screwed on a shaft extension (24) of the fixed conical disc (11).

2. Transmission according to claim 1, characterised in that the movable conical disc (12) comprises at its radially outer end an axial extension (28) which protrudes into a radially outer U-shaped end (27) of the pressure cylinder (13).

3. Transmission according to claim 1 or 2, characterised in that the nut (15) comprises on its side towards the pressure cylinder (13) a depression (25) which is dimensioned such that when the said nut is screwed down tightly an air gap is retained between the pressure cylinder (13) and the nut (15) which deforms in a plate spring-like manner.

## Revendications

1. Variateur de vitesse à poulies coniques à fonctionnement continu, comprenant un train de poulies coniques (11, 12) monté sur un arbre primaire (4), avec une poulie conique (11) solidarisée audit arbre primaire (4), une poulie conique (12) liée en rotation audit arbre (4) mais avec une possibilité de translation axiale, comprenant un cylindre de pression (13) formant, avec la poulie conique mobile (12), une chambre de pression (16), et comprenant des conduites d'alimentation (17, 18, 19) en agent de pression et des joints (20) entre le cylindre de pression (13) et la poulie conique mobile (12), le cylindre de pression (13) comportant une extrémité en U, caractérisé en ce qu'une extrémité en U (22) du cylindre de pression est prévue à la périphérie intérieure radiale du cylindre de pression (13), en ce que l'extrémité (22) du cylindre de pression sert à recevoir un prolongement (29) de la poulie conique mobile (12) s'étendant parallèlement à l'arbre primaire (4), en ce qu'un palier (14) est disposé radialement à l'extérieur de l'extrémité en U (22) du cylindre de pression pour supporter le cylindre de pression (13), et en ce que le palier (14) est immobilisé entre le cylindre de pression (13) et un écrou (15) vissé sur un prolongement formant arbre (24) de la poulie conique fixe (11).

2. Variateur selon la revendication 1, caractérisé en ce que la poulie conique mobile (12) comporte, à son extrémité extérieure radiale, un prolongement axial (28) qui pénètre dans une extrémité extérieure radiale en U (27) du cylindre de pression (13).

3. Variateur selon la revendication 1 ou 2, caractérisé en ce que l'écrou (15) comporte, sur son côté tourné vers le cylindre de pression (13), un renfoncement (25) qui est dimensionné de façon à laisser subsister, en position serrée à fond, un interstice entre le cylindre de pression (13) et l'écrou (15) qui se déforme à la façon d'un ressort-diaphragme.
